(19) **Europäisches Patentamt**
**European Patent Office**
**Office européen des brevets**

(11) **EP 2 595 807 B1**

(12) **FASCICULE DE BREVET EUROPEEN**

(45) Date de publication et mention de la délivrance du brevet:
**17.09.2014 Bulletin 2014/38**

(51) Int Cl.:
***B32B 17/10*** *(2006.01)* ***C03C 27/12*** *(2006.01)*
***F21K 99/00*** *(2010.01)*

(21) Numéro de dépôt: **11736062.8**

(22) Date de dépôt: **19.07.2011**

(86) Numéro de dépôt international:
**PCT/EP2011/062350**

(87) Numéro de publication internationale:
**WO 2012/010596 (26.01.2012 Gazette 2012/04)**

(54) **PANNEAU DE VITRAGE COMPRENANT UNE PREMIERE FEUILLE DE VERRE ET UN INTERCALAIRE THERMOPLASTIQUE**

VERGLASUNGSTAFEL UMFASSEND EINE ERSTE GLASSCHEIBE UND EINE THERMOPLASTISCHE ZWISCHENSCHICHT

GLAZING PANE COMPRISING A FIRST SHEET OF GLASS AND A THERMOPLASTIC INTERLAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2010 BE 201000449**

(43) Date de publication de la demande:
**29.05.2013 Bulletin 2013/22**

(73) Titulaire: **AGC Glass Europe**
**1348 Louvain-la-Neuve (BE)**

(72) Inventeur: **LUIJKX, Antoine**
**B-6040 Jumet (BE)**

(74) Mandataire: **Chabou, Samia**
**AGC Glass Europe**
**Technovation Centre**
**IP Department**
**Rue Louis Blériot, 12**
**6041 Gosselies (BE)**

(56) Documents cités:
**EP-A1- 1 970 195** **WO-A1-2009/050195**
**US-A1- 2002 150 764** **US-A1- 2007 178 314**

**Description**

**1. Domaine de l'invention**

Le domaine de l'invention est celui des panneaux de verre disposant de couches conductrices transparentes permettant d'augmenter les fonctionnalités du panneau de verre.

Plus précisément, l'invention concerne un vitrage feuilleté comprenant une couche conductrice de l'électricité sur l'une au moins de ses feuilles de verre.

**2. Solutions de l'art antérieur**

Parmi les panneaux de verre disposant de couches conductrices transparentes, il existe les panneaux de vitrage simple, les panneaux de double vitrage, les panneaux de vitrage feuilletés et tout autre type de panneau de vitrage.

Les vitrages feuilletés sont communément utilisés dans l'industrie du transport pour la fabrication des pare-brise de voitures automobiles et des vitrages ferroviaires, aériens et maritimes. Ils sont également utilisés dans l'industrie du bâtiment pour la fabrication de vitrages de sécurité tels que, par exemple, les verrières et les garde-fous de balcons et de terrasses.

Par exemple, un panneau de vitrage feuilleté comprend classiquement des première et seconde feuilles de verre entre lesquelles est disposé un ou plusieurs feuilles intercalaires en matériau thermoplastiques (tel que Polyvinyl Butyral ou PVB), l'ensemble étant laminé.

Il existe depuis longtemps des vitrages feuilletés comportant des couches conductrices chauffantes (formant des circuits conducteurs internes), en particulier pour utilisation comme pare-brise automobiles. Et il existe également des vitrages feuilletés comportant un circuit conducteur interne formé de fins filaments chauffants s'étendant entre des bandes collectrices de courant (par exemple tel qu'illustré par le document FR 2709911).

On connait également des panneaux de verre feuilletés intégrant des composants électroniques, tels que des diodes électroluminescentes (ou LED pour « Light Emitting Diode »), par exemple pour afficher de l'information ou pour des applications dans l'éclairage. Dans le cadre de ces applications, la fabrication d'un panneau de vitrage feuilleté intégrant des composants électroniques comprend typiquement une étape de dépôt d'une couche conductrice transparente sur la première feuille de verre, une étape de réalisation des pistes conductrices du circuit conducteur interne à partir de la couche conductrice transparente et une étape de dépôt et solidarisation (par exemple au moyen d'une colle conductrice) des composants électroniques sur les pistes conductrices du circuit conducteur interne. Un intercalaire thermoplastique est ensuite déposé sur la première feuille de verre. Le vitrage feuilleté est obtenu par application de la seconde feuille de verre sur l'intercalaire, l'ensemble étant laminé.

Dans tous les cas, pour connecter le circuit conducteur interne à un circuit électrique externe tel qu'une alimentation électrique externe, il est nécessaire d'insérer, avant le feuilletage du panneau, un connecteur électrique, par exemple une barre omnibus ou bus bar en anglais, dont une extrémité s'étend au-delà des bords du vitrage feuilleté.

EP 1 840 449 décrit un tel panneau de verre feuilleté à LEDs comprenant deux bus bars, chaque bus bar étant adapté pour fournir l'alimentation électrique à une pluralité de pistes conductrices internes elles même reliées à des circuits conducteurs internes réalisés à partir de la couche conductrice. Les bus bars sont déposés sur la couche conductrice et chaque bus bar comprend une pluralité d'éléments isolants électriques disposés à intervalle régulier le long de sa longueur de façon à fournir alternativement la connexion électrique et l'isolation électrique, respectivement, entre une bande conductrice du bus bar et la couche conductrice en des positions sélectionnées. Ainsi, il est possible de fournir l'alimentation électrique de manière indépendante ou non à plusieurs circuits conducteurs internes réalisés à partir de la couche conductrice et portant des LEDs.

Les inventeurs ont observé un premier problème dans un tel panneau de verre feuilleté à LEDs. En effet, ils ont remarqué que l'intensité lumineuse des LEDs du panneau diminue dans le temps, et ceci plus particulièrement lorsque les LEDs sont alimentés avec de plus fortes puissances électrique (typiquement 70mA). Par exemple, dans le cas d'une LED Nichia Rigel NFSL036BT feuilleté entre un verre clair et un verre à couche conductrice en utilisant un intercalaire de type PVB (par exemple le PVB Sekisui RZN14), une décroissance anormale du flux lumineux de l'ordre de 70% est observée après 5000 heures de fonctionnement lorsqu'elle est alimentée par un courant de 70mA (lorsqu'elle est alimentée à 20mA, une décroissance normale de l'ordre 10% est observée après 5000h).

Les inventeurs ont observé un second problème dans un tel panneau de verre feuilleté à LEDs. En effet, ils ont constaté l'apparition des tâches de coloration brunâtre sur la couche conductrice au niveau de l'électrode négative des LEDs au bout d'un certain temps d'utilisation du panneau, et ceci plus particulièrement lorsque la tension électrique appliquée est importante et/ou lorsque la température autour de la couche est importante. Cette interaction est observée d'autant plus rapidement avec certains types d'intercalaire pour applications feuilleté, par exemple le PVB de référence RB41 commercialisé par la société Solutia.

Ces diminutions d'intensité lumineuse et tâches limitent la durée de vie de tels panneaux de vitrage.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir un panneau de vitrage feuilleté intégrant des LEDs alimentées électriquement via une couche conductrice dont la durée de vie est plus grande que les panneaux classiques.

Un autre objectif de l'invention, dans au moins un de ses modes de réalisation, est de fournir un tel panneau dans lequel la diminution de l'intensité lumineuse émise par les LEDs est ralentie par rapport aux panneaux classiques.

Un autre objectif de l'invention, dans au moins un de ses modes de réalisation, est de fournir un tel panneau dans lequel le délai d'apparition de la première tâche colorée sur la couche conductrice est ralentie par rapport aux panneaux classiques.

L'invention, dans au moins un de ses modes de réalisation, a encore pour objectif de fournir un tel connecteur qui soit simple à fabriquer et à mettre en oeuvre.

### 4. Exposé de l'invention

Conformément à un mode de réalisation particulier, l'invention concerne un panneau de vitrage comprenant :

- une première feuille de verre

- une couche conductrice ;

- des pistes d'alimentation électriques réalisées à partir de la couche conductrice permettant d'alimenter électriquement au moins une LED ;

- au moins une feuille de matériau thermoplastique.

Selon l'invention, la feuille de matériau thermoplastique comprend 20 à 30 ppm d'ions $Na^+$, 1 à 5 ppm d'ions $K^+$, 5 à 10 ppm d'ions $Ca^{++}$ et 10 à 20 ppm d'ions $Mg^{++}$.

Les inventeurs ont remarqué que la diminution dans le temps de l'intensité lumineuse des LEDs du panneau résulte d'une première interaction entre la feuille de matériau thermoplastique, par exemple en PVB, et les LEDs, et ceci plus particulièrement lorsque les LEDs sont alimentés avec de plus fortes puissances électrique (typiquement 70mA). En effet, sous l'effet des champs électriques générés autour des LEDs, certains ions initialement présents dans des quantités déterminées dans le PVB diffusent jusqu'à la puce de la LED (le cas échéant à travers le package de la LED), ce qui conduit à une diminution de ses performances lumineuses (intensité lumineuse) avec le temps.

Les inventeurs ont remarqué que l'apparition de tâches de coloration brunâtre sur la couche conductrice au niveau de l'électrode négative des LEDs au bout d'un certain temps d'utilisation du panneau résulte d'une seconde interaction entre la feuille de matériau thermoplastique, par exemple en PVB, et la couche conductrice transparente et plus particulièrement lorsque la tension électrique appliquée aux LEDs est importante et/ou lorsque la température autour de la couche est importante. En effet, cette coloration brunâtre est due à une diffusion de certains ions initialement présents dans des quantités déterminées dans le PVB, par exemple le calcium et le potassium, qui migrent sous l'effet du champ électrique (qui peut être important : de l'ordre de 4V sur $100\mu m$ soit 40.000V/m) d'alimentation des diodes appliqué entre les électrodes positive et négative des diodes depuis l'intercalaire vers la couche conductrice, ce qui crée une augmentation locale de résistivité dans la couche conductrice qui limite donc les performances du panneau. Ce phénomène apparait d'autant plus rapidement que la température (dépendant du courant traversant les LEDs et des forme et dimensions des pistes d'alimentations électriques) au niveau des LEDs est élevée (elle peut aller jusqu'à 60°C).

Les inventeurs ont également observé qu'en sélectionnant un matériau thermoplastique comprenant 20 à 30 ppm d'ions $Na^+$, 1 à 5 ppm d'ions $K^+$, 5 à 10 ppm d'ions $Ca^{++}$ et 10 à 20 ppm d'ions $Mg^{++}$ pour la feuille intercalaire (entre les première et seconde feuilles de verre), la diminution de l'intensité lumineuse émise par les LEDs ainsi que l'apparition de la première tâche brune sur la couche conductrice sont ralentis par rapport aux panneaux classiques. Ainsi, la durée de vie de tels panneaux lumineux s'en trouve augmentée.

Les LEDs peuvent être tout type de LED tels que des puces semiconductrices (ou die en anglais), des LEDs packagés par exemple tel que des composants SMD pour « Surface Mount Device » ou sous tout autre type de package tels que des ampoules.

Par feuille de verre, on entend désigner toute plaque de verre minéral ou organique d'épaisseur pouvant varier entre 1 et 50 mm. L'épaisseur peut ne pas être constante en différents points de la surface de la feuille. La surface peut être plane ou courbe. On préfère cependant des feuilles de verre planes d'épaisseur constante en tout point de la surface.

Le verre minéral peut être constitué indifféremment d'un ou plusieurs types de verres connus comme les verres sodo-calcique, les verres au bore, les verres cristallins et semi-cristallins. Le verre organique peut être un polymère ou un copolymère transparent thermodur ou thermoplastique rigide tel que, par exemple, une résine de synthèse polycarbonate, polyester ou polyvinylique transparente.

On préfère les verres minéraux ou organiques de type clairs ou très légèrement colorés de manière homogène dans la masse ou dans une zone mince proche d'une surface extérieure du verre. Les verres minéraux de type sodo-calcique conviennent particulièrement bien, tels que ceux qui comprennent les composants de base suivants (pourcentages en poids) :

| | |
|---|---|
| SiO2 | 60 à 75 % |
| Na2O | 10 à 20 % |
| CaO | 2 à 16% |
| K2O | 0 à 10 % |
| MgO | 0 à 10 % |
| Al2O3 | 0 à 5% |
| BaO | 0 à 2 % |
| BaO + CaO + MgO | 10 à 20 % |
| K2O + Na2O | 10 à 20 %. |

La feuille de verre du panneau de vitrage conforme à l'invention peut être une feuille rigide, c'est-à-dire de résistance mécanique aux sollicitations de flexion et de torsion suffisante pour ne pas se déformer sous l'action de sollicitations extérieures que l'on rencontre couramment dans le milieu ambiant dans lequel on utilise généralement le vitrage.

Le vitrage selon l'invention comprend aussi au moins une feuille d'un matériau thermoplastique. Par matériau thermoplastique, on entend ici un matériau qui peut se déformer à volonté sous l'action de la chaleur et qui retrouve sa rigidité au refroidissement. Dans le vitrage conforme à l'invention au moins une feuille de matériau thermoplastique est collée sur au moins une feuille de verre.

Le vitrage conforme à l'invention comprend aussi des pistes d'alimentation électrique des LEDs. Celles-ci ont généralement la forme de bandes de film transparent conducteur de l'électricité. Elles peuvent être déposées sur une surface interne au vitrage d'au moins une feuille de verre du panneau. Lorsque le vitrage comprend, par exemple, plus d'une feuille de verre et un nombre quelconque de feuilles de matériau thermoplastique prises en sandwich entre les feuilles de verre, les pistes peuvent être déposées sur plus d'une face interne au vitrage de feuilles de verre.

Alternativement, les pistes d'alimentation électrique formées de bandes de film transparent conducteur de l'électricité peuvent aussi être déposées sur au moins une face d'une feuille de matériau thermoplastique.

Le vitrage conforme à l'invention peut aussi comprendre, à la fois des pistes d'alimentation électrique formées de bandes de film transparent conducteur de l'électricité déposées sur une surface interne au vitrage d'au moins une feuille de verre et d'autres bandes de film transparent conducteur de l'électricité déposées sur au moins une face d'une feuille de matériau thermoplastique. Dans cette dernière éventualité, l'ordre de l'empilage individuel des feuille(s) de verre, bande(s) de film conducteur et feuille(s) de matériau thermoplastique est indifférent.

Avantageusement, le panneau selon l'invention comprend en outre une seconde feuille de verre, les première et seconde feuilles de verre étant feuilletées ensemble via la feuille de matériau thermoplastique. Bien entendu, conformément à l'invention, les première et seconde feuilles de verre peuvent être feuilletées ensemble via un nombre quelconque de feuilles de matériaux thermoplastiques (distincts ou identiques) superposés.

Ainsi, le panneau de vitrage selon l'invention peut être un panneau de vitrage feuilleté mais il peut également être un panneau de simple vitrage comprenant un sandwich constitué de la première feuille de verre sur lequel est solidarisée une feuille intercalaire de matériau thermoplastique. En outre, le panneau peut également être un panneau de double vitrage dans lequel une seconde feuille de verre peut être solidarisée à ce sandwich (première feuille de verre et feuille d'intercalaire) de sorte à former une cavité entre le sandwich et la seconde feuille de verre. Bien entendu, la cavité peut, le cas échéant, être remplie d'un gaz isolant tel que de l'air sec, de l'argon, du Krypton, ...

Selon un mode de mise en oeuvre particulier de l'invention, la feuille de matériau thermoplastique comprend 25 ppm d'ions Na$^+$, 3 ppm d'ions K$^+$, 7 ppm d'ions Ca$^{++}$ et 16 ppm d'ions Mg$^{++}$.

Avantageusement, la couche conductrice est transparente dans le visible, i.e. dont la transmission lumineuse dans le visible (bande lumineuse s'étendant entre 400nm et 800nm) est supérieure à 70%. Cette couche conductrice de l'électricité transparente peut être de nature diverse et comprendre elle-même plusieurs couches.

Un premier mode de réalisation de cette couche transparente est celui de couches minces de dioxyde d'étain dopé au fluor et/ou à l'antimoine ou encore les couches minces d'oxyde d'indium mélangé à du dioxyde d'étain. Un revêtement d'un tel film conducteur transparent peut, par exemple, avoir été déposé sur au moins une feuille de verre par la technique bien connue de dépôt chimique en phase vapeur (CVD), à partir de précurseurs en phase gazeuse.

Un deuxième mode de réalisation de cette couche transparent conducteur de l'électricité est celui où le film est formé d'un empilage de couches comprenant au moins une couche d'un métal conducteur de l'électricité tel que l'aluminium ou l'argent. De tels empilages sont par exemple le résultat d'une succession de dépôts par pulvérisation cathodique magnétron sous vide ("magnetron sputtering" dans la littérature anglo-saxonne). L'empilage de couches est, par exemple dans ce cas :

TiO2 / ZnO / Ag / Ti / ZnO / SnO2

Bien entendu, la couche conductrice selon l'invention peut également ne pas être transparente dans le visible, par exemple une couche d'un métal conducteur dont l'épaisseur ne permet pas d'obtenir la transparence dans le visible.

Selon une caractéristique avantageuse de l'invention, la feuille de matériau thermoplastique est un polyvinylbutyral.

Avantageusement, la feuille de matériau thermoplastique est un polyvinylbutyral référencé « Solar BG R40 » commercialisé par la société KURARAY.

## 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un schéma d'un panneau de vitrage feuilleté selon le premier exemple de réalisation de l'invention ;

- la figure 2 présente une vue en coupe du panneau de la figure 1 ;

- la figure 3 présente des courbes de l'intensité lumineuse de la LED en lumens (lm) en fonction de la durée d'utilisation en heures pour différents panneaux de vitrages feuilletés, certains classiques et un autre selon l'invention.

## 6. Description d'un mode de réalisation de l'invention

### 1. Description schématique d'un panneau de vitrage feuilleté selon l'invention

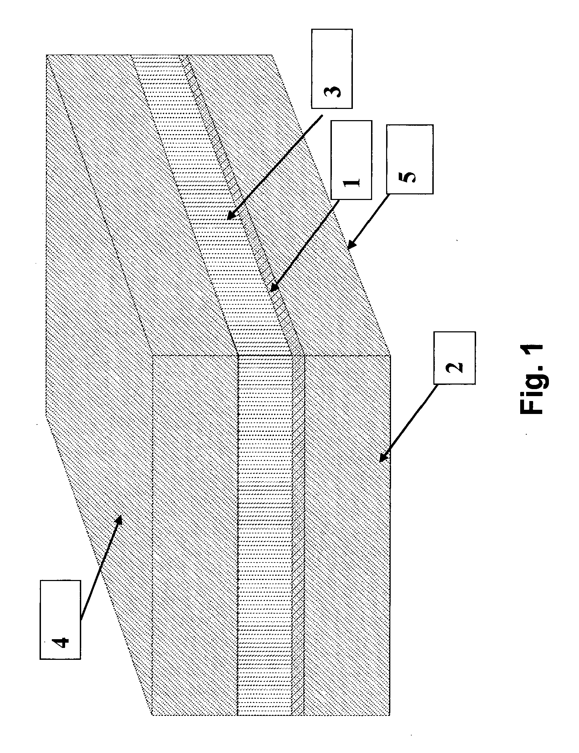

On se place dans la suite dans le cadre d'un premier exemple de réalisation d'un panneau de vitrage selon la présente invention (*figure 1)* dans lequel le panneau de vitrage est un panneau de vitrage feuilleté comprenant :

- une première feuille de verre 2 revêtue totalement d'une couche conductrice 1, qui est par exemple une couche conductrice transparente dans le visible, i.e. dont la transmission lumineuse dans le visible (bande lumineuse s'étendant entre 400nm et 800nm) est supérieure à 70% ;

- des pistes d'alimentation électriques 11, 12 réalisées à partir de la couche conductrice 1, les pistes portant et permettant d'alimenter électriquement des diodes électroluminescentes 8 (ou « Light Emitting Diodes » en anglais ci-après désignées par LEDs) ;

- une feuille intercalaire d'un matériau thermoplastique 3 ;

- une seconde feuille de verre 4, les première et seconde feuilles de verre étant feuilletées ensemble via la feuille de matériau thermoplastique ;

- deux connecteurs (7) permettant de relier électriquement les pistes conductrices à un circuit électrique externe par exemple un dispositif d'alimentation externe des LEDs 8.

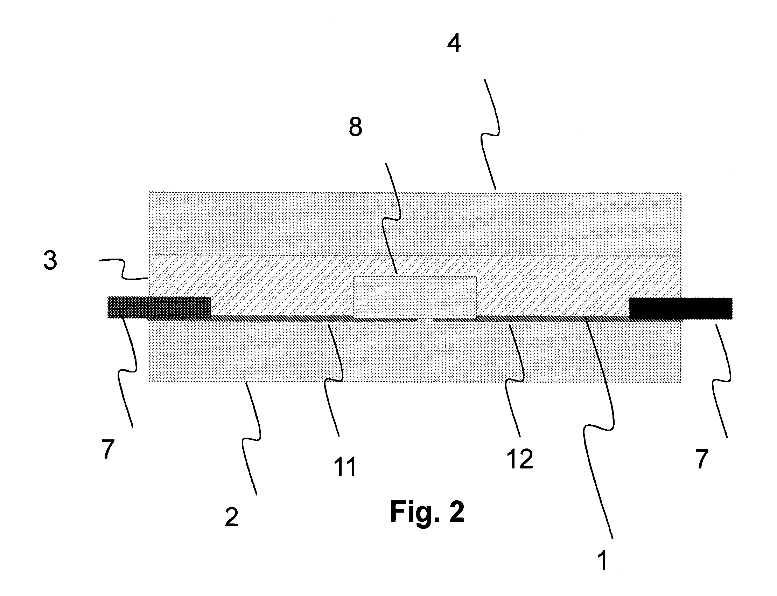

On présente, en relation avec la *figure 2,* une vue en coupe du panneau de la figure 1.

2. Réalisation d'échantillons de panneaux de vitrage, certains étant conformes à l'état de la technique et d'autres étant conformes à l'invention

Des échantillons de panneaux de vitrages feuilletés intégrant une LED ont été réalisés avec des feuilles en matériaux thermoplastiques constituée de polyvinylbutyrals ("PVB"s) de diverses provenances et des feuilles de verres identiques. Ils ont été obtenus de la manière suivante :

Une première feuille de verre commercial d'AGC Glass Europe de marque PLANIBEL G, constituée d'un verre clair sodo-calcique de 4 mm d'épaisseur est revêtue d'un empilage de couches minces transparentes pyrolytiques formé d'une sous-couche en oxy-carbure de silicium et d'une couche conductrice de l'électricité en oxyde d'étain dopé au fluor d'environ 15 $\Omega/\square$ de résistance superficielle.

Puis, on découpe un échantillon carré de 10 cm de côté dans cette première feuille de verre. On trace ensuite sur la couche au milieu du carré un sillon rectiligne s'étendant entre deux côtés opposés au moyen d'un laser infrarouge à fibre qui a enlevé totalement l'empilage des couches minces recouvrant le verre sur une largeur d'environ 100 $\mu$m. On colle ensuite, grâce à une colle conductrice, une LED commercialisées par la société Nichia sous la référence « Nichia Rigel B Cool White » à cheval sur le sillon rectiligne, de sorte que chacune de ses borne soit en contact avec l'un des deux zones de couche conductrices délimitées par le sillon rectiligne.

On colle ensuite, à titre de connecteur électrique, sur les bords de la couche transparente conductrice de chacune des deux moitiés d'échantillon un ruban de cuivre au moyen d'un adhésif conducteur. On applique ensuite sur l'échantillon de verre, du côté de la couche conductrice, une feuille intercalaire en PVB à tester de même dimension que l'échantillon carré de verre conducteur et d'épaisseur déterminée (préférentiellement comprise entre 0,76mm et 1,7mm, par exemple choisie parmi la gamme disponible, généralement déclinée par multiples de 0,76mm ce qui conduit en pratique à souvent utiliser des intercalaires de 1.52mm). On applique ensuite sur la feuille de PVB recouvrant l'échantillon en verre une deuxième feuille de verre sodo-calcique clair de 4 mm d'épaisseur et de même dimension que cet échantillon et que la feuille de PVB.

L'empilage des feuilles de verre, couche conductrice et feuille de PVB intercalaire duquel débordent les deux rubans connecteurs en cuivre a ensuite fait l'objet d'un laminage dans les conditions de pressage et d'autoclavage sous-vide habituelles de manière à réaliser un vitrage feuilleté à deux feuilles de verre emprisonnant deux pistes conductrices, exempt de bulles d'air.

On présent dans le tableau 1, les compositions en ppm de Na$^+$, K$^+$, Ca$^{++}$ et Mg$^{++}$ (résultats d'analyses chimiques) de certains PVB mis en oeuvre dans les échantillons réalisés.

**Tableau 1**

| Fabricant PVB | Nom (/type) PVB | Teneurs en ions, ppm poids | | | |
|---|---|---|---|---|---|
| | | Na$^+$ | K$^+$ | Ca$^{++}$ | Mg$^{++}$ |
| **Kuraray** | Solar BG R40 | 25 | *3* | *7* | *16* |
| Solutia | RB 41 | 2,6 | *48,0* | *2,9* | *24,0* |
| Sekisui | RZN 14 | 1,9 | 0,8 | 3,3 | 68,5 |

Le PVB commercialisé par la société Kuraray sous la référence « Solar BG R40 » conduit à des vitrages conformes à l'invention alors que les PVB commercialisés par :

- la société Solutia sous la référence « RB 41 »

- la société Sekisui sous les références « RZV 12 », « RZN 14 » et « RZN 12 »

ne conduisent pas à des vitrages conformes à l'invention.

3. Test accéléré de comportement des PVB laminés

Afin de mesurer les performances des panneaux de vitrage ainsi réalisés en terme de diminution de l'intensité lumineuse émise par la LED, ces panneaux ont été ont été connectés en permanence à une source électrique alimentant la LED en continu avec un courant de 70mA et placés à température ambiante (environ 20°C).

Afin de mesurer les performances des panneaux de vitrage ainsi réalisés en terme de délai d'apparition de la première tâche brune sur la couche conductrice, ces panneaux ont été connectés en permanence à une source de tension électrique continue de 20V et placés sous cette tension dans une étuve chauffée de température réglée à 80°C. Un examen visuel du vitrage a été effectué à intervalles de temps réguliers, afin de déterminer le délai au bout duquel apparait la première tache colorée au voisinage du sillon tracé au laser dans le milieu de la couche conductrice d'une des feuilles de verre du vitrage feuilleté.

Ces valeurs de tension et de température permettent de réaliser des tests de manière accélérée. On obtient le délai d'apparition de la première tâche colorée pour une tension de 4V et à température ambiante (20°C) par extrapolation, en utilisant la relation empirique suivante (vérifiée par plusieurs séries de mesures) :

$$\textbf{lifetime2/lifetime1 = voltage1/voltage2 * exp(0.059*(temperature1-temperature2))}.$$

où lifetime est la durée de vie ou délai d'apparition de la première tâche brune sur la couche conductrice du vitrage et voltage est la tension appliquée.

<u>4. Comparaison des performances de PVB différents</u>

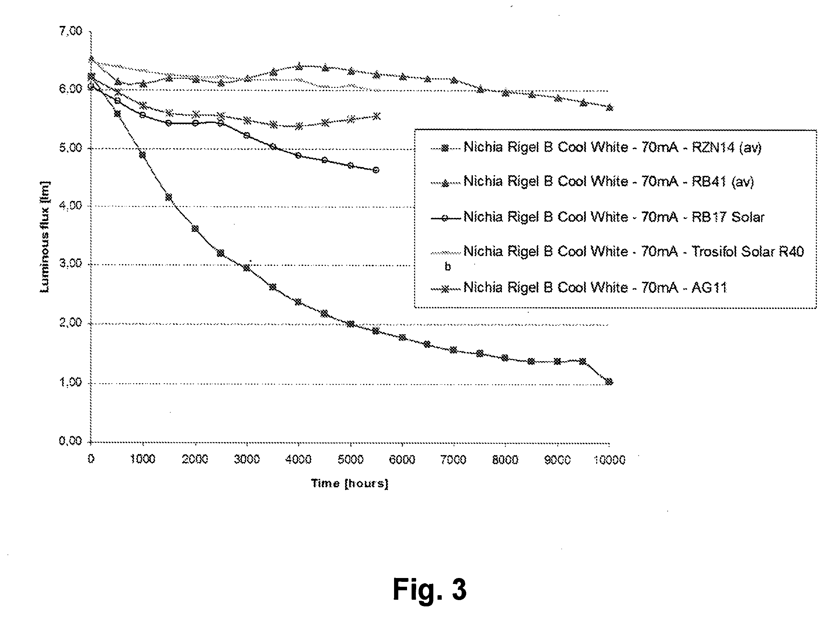

On présente en relation avec la *figure 3,* des courbes de l'intensité lumineuse de la LED (Nichia Riguel B cool White à 70mA) en lumens (lm) en fonction de la durée d'utilisation en heures pour les panneaux de vitrages feuilletés réalisés, avec 5 PVBs d'origines différentes : les PVBs RB 41, RB17 et AG11 commercialisés par Solutia, le PVB RZN14 commercialisé par Sekisiu, le PVB Trofisol Solar BG R40 de Kuraray.

Par ailleurs, dans le tableau 2 qui suit, on a porté le délai d'apparition de la première tache colorée dans le voisinage du sillon des couches conductrices d'échantillons de vitrages feuilletés obtenus selon la méthode décrite au point 2 qui précède, avec des PVB d'origine différente.

**Tableau 2**

| Réf. PVB | Nombre d'heures mesurées avant apparition tâche(s) à 80°C et pour 20V | Nombre de mois extrapolés avant apparition tâche(s) à 20°C et pour 4V |
|---|---|---|
| Solutia RB41 | 24 | 6 |
| Sekisui RZN14 | 404 | 120 |
| Solutia RB17 | 60 | 18 |
| Kuraray Solar BG R40 | 444 | 132 |
| Solutia AG11 | 77 | 24 |

On peut voir que seul le vitrage fabriqué avec un PVB de Kuraray Trofisol Solar BG R40 qui est un vitrage conforme à l'invention permet d'allier :

- un délai d'apparition de la première tache colorée important : (132mois à 4V et 20°C) et

- un maintien de l'intensité lumineuse de la LED sur une durée importante (diminution de moins de 10% au bout de 5500 heures).

Les autres panneaux non conformes à l'invention (réalisés avec les PVBs RB 41, RB17 et AG11 commercialisés par Solutia et RZN14 commercialisé par Sekisiu) conduisent à des performances beaucoup moins bonnes pour au moins l'un des paramètre : délai d'apparition de la première tache colorée et diminution de l'intensité lumineuse de la LED dans le temps.

Bien entendu, l'invention n'est pas limitée aux exemples de réalisation mentionnés ci-dessus.

En particulier, l'Homme du Métier pourra apporter toute variante dans ces exemples et même les combiner entre eux.

**Revendications**

**1.** Panneau de vitrage comprenant :

- une première feuille de verre (1) ;
- une couche conductrice (1) ;
- des pistes d'alimentation électriques (11, 12) réalisées à partir de la couche conductrice permettant d'alimenter électriquement au moins une LED (8);
- au moins une feuille de matériau thermoplastique (3) ;

**caractérisé en ce que** la feuille de matériau thermoplastique comprend 20 à 30 ppm d'ions $Na^+$, 1 à 5 ppm d'ions $K^+$, 5 à 10 ppm d'ions $Ca^{++}$ et 10 à 20 ppm d'ions $Mg^{++}$.

2. Panneau selon la revendication 1, **caractérisé en ce que** les pistes d'alimentation électriques (11, 12) sont déposées sur une surface interne au vitrage d'au moins une feuille de verre (2, 4).

3. Panneau selon la revendication 1, caractérisé en ce en ce que les pistes d'alimentation électrique (11, 12) sont déposées sur au moins une face d'une feuille de matériau thermoplastique (3).

4. Panneau selon l'une quelconque des revendications précédentes, caractérisé en ce en ce qu'il comprend en outre une seconde feuille de verre (4), les première et seconde feuilles de verre étant feuilletées ensemble via la feuille de matériau thermoplastique (3).

5. Panneau selon l'une quelconque des revendications précédentes, **caractérisé en ce que** la feuille de matériau thermoplastique comprend 25 ppm d'ions $Na^+$, 3 ppm d'ions $K^+$, 7 ppm d'ions $Ca^{++}$ et 16 ppm d'ions $Mg^{++}$.

6. Panneau selon l'une quelconque des revendications précédentes, **caractérisé en ce que** la couche conductrice (1) est transparente dans le visible.

7. Panneau selon l'une quelconque des revendications précédentes, **caractérisé en ce que** la feuille de matériau thermoplastique (3) est un polyvinylbutyral.

8. Panneau selon l'une quelconque des revendications précédentes, **caractérisé en ce que** la feuille de matériau thermoplastique est un polyvinylbutyral référencé « Solar BG R40 » commercialisé par la société Kuraray.

**Patentansprüche**

1. Verglasungstafel, umfassend:

- eine erste Glasscheibe (1);
- eine leitende Schicht (1);
- elektrische Versorgungsbahnen (11, 12), die ausgehend von der leitenden Schicht verwirklicht sind und erlauben, mindestens eine LED (8) elektrisch zu versorgen;
- mindestens eine Scheibe aus thermoplastischem Material (3);
**dadurch gekennzeichnet, dass** die Scheibe aus thermoplastischem Material 20 bis 30 ppm $Na^+$-Ionen, 1 bis 5 ppm $K^+$-Ionen, 5 bis 10 ppm $Ca^{++}$-Ionen und 10 bis 20 ppm $Mg^{++}$-Ionen umfasst.

2. Tafel nach Anspruch 1, **dadurch gekennzeichnet, dass** die elektrischen Versorgungsbahnen (11, 12) auf einer inneren Verglasungsoberfläche mindestens einer Glasscheibe (2, 4) angeordnet sind.

3. Tafel nach Anspruch 1, **dadurch gekennzeichnet, dass** die elektrischen Versorgungsbahnen (11, 12) auf mindestens einer Fläche einer Scheibe aus thermoplastischem Material (3) angeordnet sind.

4. Tafel nach einem der vorhergehenden Ansprüche, **dadurch gekennzeichnet, dass** sie überdies eine zweite Glasscheibe (4) umfasst, wobei die erste und zweite Glasscheibe über die Scheibe aus thermoplastischem Material (3) zusammengefügt sind.

5. Tafel nach einem der vorhergehenden Ansprüche, **dadurch gekennzeichnet, dass** die Scheibe aus thermoplastischem Material 25 ppm $Na^+$-Ionen, 3 ppm $K^+$-Ionen, 7 ppm $Ca^{++}$-Ionen und 16 ppm $Mg^{++}$-Ionen umfasst.

6. Tafel nach einem der vorhergehenden Ansprüche, **dadurch gekennzeichnet, dass** die leitende Schicht (1) im sichtbaren Bereich transparent ist.

7.  Tafel nach einem der vorhergehenden Ansprüche, **dadurch gekennzeichnet, dass** die Scheibe aus thermoplastischem Material (3) ein Polyvinylbutyral ist.

8.  Tafel nach einem der vorhergehenden Ansprüche, **dadurch gekennzeichnet, dass** die Scheibe aus thermoplastischem Material ein Polyvinylbuyral mit der Bezeichnung "Solar BG R40" ist, das von der Firma Kuraray vertrieben wird.

**Claims**

1.  Glazing panel comprising:

    • a first glass sheet (1);
    • a conductive layer (1);
    • electric power supply tracks (11, 12) formed from the conductive layer enabling at least one LED (8) to be supplied with electric power;
    • at least one sheet of thermoplastic material (3);
    **characterised in that** the sheet of thermoplastic material comprises 20 to 30 ppm of $Na^+$ ions, 1 to 5 ppm of $K^+$ ions, 5 to 10 ppm of $Ca^{++}$ ions and 10 to 20 ppm of $Mg^{++}$ ions.

2.  Panel according to claim 1, **characterised in that** the electric power supply tracks (11, 12) are deposited onto a surface to the inside of the glazing of at least one glass sheet (2, 4).

3.  Panel according to claim 1, **characterised in that** the electric power supply tracks (11, 12) are deposited onto at least one face of a sheet of thermoplastic material (3).

4.  Panel according to any one of the preceding claims, **characterised in that** it additionally comprises a second glass sheet (4), wherein the first and second glass sheets are laminated together by means of the sheet of thermoplastic material (3).

5.  Panel according to any one of the preceding claims, **characterised in that** the sheet of thermoplastic material comprises 25 ppm of $Na^+$ ions, 3 ppm of $K^+$ ions, 7 ppm of $Ca^{++}$ ions and 16 ppm of $Mg^{++}$ ions.

6.  Panel according to any one of the preceding claims, **characterised in that** the conductive layer (1) is transparent in the visible range.

7.  Panel according to any one of the preceding claims, **characterised in that** the sheet of thermoplastic material (3) is a polyvinyl butyral.

8.  Panel according to any one of the preceding claims, **characterised in that** the sheet of thermoplastic material is a polyvinyl butyral with the name "Solar BG R40" available from Kuraray.

**Fig. 1**

EP 2 595 807 B1

Fig. 2

**Fig. 3**

**RÉFÉRENCES CITÉES DANS LA DESCRIPTION**

**Documents brevets cités dans la description**

- FR 2709911

- EP 1840449 A